# EUROPÄISCHE PATENTSCHRIFT

(11) **EP 0 734 402 B1**
(45) Veröffentlichungstag und Bekanntmachung des Hinweises auf die Patenterteilung: **20.10.1999**
(21) Anmeldenummer: 95902108.0
(22) Anmeldetag: 01.12.1994
(51) Int. Cl.: C08F 290/06, C09D 151/08, B05D 7/16

(54) **WÄSSRIGE AUTOLACKE, UND VERFAHREN ZUR LACKIERUNG VON AUTOMOBILKAROSSERIEN**
AQUEOUS AUTOMOBILE BODYWORK PAINT, AND METHOD OF PAINTING AUTOMOBILE BODYWORK
PEINTURE AQUEUSE POUR LA CARROSSERIE AUTOMOBILE, ET PROCEDE POUR L'APPLICATION DE CETTE PEINTURE SUR LA CARROSSERIE AUTOMOBILE

(30) Priorität: 14.12.1993 DE 4342551
(43) Veröffentlichungstag der Anmeldung: 02.10.1996
(73) Patentinhaber: BASF Coatings Aktiengesellschaft, 48165 Münster (DE)
(72) Erfinder: SCHWARTE, Stephan, D-48282 Emsdetten (DE); CHMIELEWSKI, Dietmar, D-48165 Münster (DE); WIGGER, Georg, D-48151 Münster (DE)
(74) Vertreter: Fitzner, Uwe, Dr.
(86) Internationale Anmeldenummer: EP9403991
(87) Internationale Veröffentlichungsnummer: WO9516720

(56) Entgegenhaltungen:
- EP-A- 0 469 646
- US-A- 4 294 737
- US-A- 4 564 648
- Patent Abstracts of Japan, Band 8, Nr 34(C-210); & JP,A,58198513 (ASAHI KASEI KOGYO K.K.), 1983-11-18

## Beschreibung

Die Erfindung betrifft wäßrige Polymerdispersionen, wäßrige Lacke auf Basis dieser Polymerdispersionen und ein Verfahren zur Lackierung von Automobilkarosserien.

Wäßrige Polymerdispersionen und wäßrige Lacke auf der Basis von wäßrigen Polymerdispersionen sind bekannt. In der EP-A-469 646 werden beispielsweise wäßrige Polymerdispersionen von Hybridpolymeren beschrieben, die zur Herstellung von wäßrigen Lacken verwendet werden. Die Hybridpolymere werden hergestellt, indem in Gegenwart eines mit ungesättigten Fettsäuren umgesetzten epoxidgruppenhaltigen Umsetzungsproduktes aus n Mol einer Bisepoxidverbindung und n-1 Mol einer Dicarbonsäure ethylenisch ungesättigte Monomere polymerisiert werden. Das Hybridpolymer ist nach Neutralisation der im Polymer enthaltenen Säuregruppen in Wasser dispergierbar. Aus den so hergestellten wäßrigen Polymerdispersionen können wäßrige Lacke hergestellt werden, die nachteiligerweise Lackfilme liefern, die insbesondere bei Anwendung von längeren Einbrennzeiten und/oder höheren Einbrenntemperaturen zur Vergilbung neigen.

Aus dem Dokument US-4564648 ist eine ähnliche Polymerdispersion bekannt, wobei die Umsetzung der Epoxidverbindung mit einer Mischung einer bifunktionellen Säure und einer monofunktionellen Säure erfolgt. Hierbei ist keine ethylenisch ungesättigte Monocarbonsäure gegenwärtig. Weiterhin ist aus dem Dokument US-4294737 ein Überzugsmittel aus dem Bereich der Lebensmittelbehalter-Beschichtungstechnologie bekannt, in dessen Rahmen mit Halbestern aus Fettalkoholen gearbeitet wird.

Die der vorliegenden Erfindung zugrundeliegende Aufgabenstellung liegt in der Bereitstellung von wäßrigen Polymerdispersionen, aus denen wäßrige Lacke herstellbar sind, mit denen Lackfilme hergestellt werden können, die die oben beschriebenen Nachteile nicht bzw. nur in einem verminderten Ausmaß zeigen und die außerdem noch gute Oberflächeneigenschaften, insbesondere eine hohe Säure- und Kratzbeständigkeit aufweisen.

Diese Aufgabe wird überraschenderweise durch die Bereitstellung eines wäßrigen Automobilkarosserielacks enthaltend als Bindemittel eine wäßrige Bindemittel - Polymerdispersion, die herstellbar ist, indem
(A) 1,0 Gewichtsteile einer Mischung aus
   (a1) 2,5 bis 13 Gew.-% eines säuregruppenhaltigen, ethylenisch ungesättigten Monomeren oder einer Mischung aus solchen Monomeren und
   (a2) 87 bis 97,5 Gew.-% eines säuregruppenfreien, ethylenisch ungesättigten Monomeren oder einer Mischung aus solchen Monomeren,
   wobei die Summe der Gewichtsprozentangaben der Komponenten (a1) und (a2) stets 100 Gew.-% ergibt, in Gegenwart von
(B1) 0,5 bis 9,0 Gewichtsteilen eines Umsetzungsproduktes aus
   (b1) einer Verbindung, die pro Molekül im statistischen Mittel mindestens 1,5 Epoxidgruppen enthält oder einer Mischung aus solchen Verbindungen und
   (b2) einer Mischung aus
      (b21) einer ethylenisch ungesättigten Monocarbonsäure mit 3 - 8 C-Atomen oder einer Mischung aus solchen Monocarbonsäuren und
      (b22) einer gesättigten Fettsäure oder einer Mischung aus gesättigten Fettsäuren
   oder in Gegenwart von
(B2) 0,5 bis 9,0 Gewichtsteilen eines Umsetzungsproduktes aus der Komponente (b1) und
   (b3) einem Halbester aus einer ethylenisch ungesättigten Dicarbonsäure und einem gesättigten Fettalkohol oder einer Mischung aus solchen Halbestern
   oder in Gegenwart von
(B3) 0,5 bis 9,0 Gewichtsteilen eines Umsetzungssproduktes aus der Komponenten (b1) und
   (b4) einer Mischung aus den Komponenten (b21), (b22) und (b3) oder einer Mischung aus den Komponenten (b21) und (b3) oder einer Mischung aus den Komponenten (b22) und (b3)
   radikalisch polymerisiert werden und das erhaltene Polymerisationsprodukt während oder nach der Neutralisation von mindestens 20 Prozent der im Polymerisationsprodukt enthaltenen Säuregruppen in eine wäßrige Polymerdispersion überführt wird, wobei die Komponenten (b1), (b2), (b3) und (b4) in solchen Mengenverhältnissen miteinander umgesetzt werden, daß die Komponenten (B1), (B2) und (B3) pro Molekül im statistischen Mittel höchstens noch 0,25 Epoxidgruppen und mindestens 0,4 von der Komponente (b21) und/oder der Komponente (b3) stammende ethylenisch ungesättigte Gruppen enthalten.

Als Komponente (a1) kann im Prinzip jedes säuregruppenhaltige, ethylenisch ungesättigte Monomer oder eine Mischung aus solchen Monomeren eingesetzt werden. Als Beispiele für säuregruppenhaltige ethylenisch ungesättigte Monomere werden Acrylsäure, Methacrylsäure, Maleinsäure und Fumarsäure genannt. Als Komponente (a1) wird vorzugsweise Methacrylsäure oder Acrylsäure oder eine Mischung aus Methacrylsäure und Acrylsäure eingesetzt.

Als Komponente (a2) kann jedes säuregruppenfreie, ethylenisch ungesättigte Monomer oder eine Mischung aus solchen Monomeren eingesetzt werden. Als Beispiele für säuregruppenfreie, ethylenisch ungesättigte Monomere werden genannt: (Cyclo)alkyl (meth)acrylate mit 1 - 12 Kohlenstoffatomen im (Cyclo)alkylrest wie z.B. Methyl(meth)acrylat, Ethyl(meth)acrylat, Propyl(meth)acrylat, Isopropyl(meth)acrylat, Butyl(meth)acrylat, 2-Ethylhexyl(meth)acrylat, Octyl (meth)acrylat, Isobornyl(meth)acrylat, Dodecyl(meth)acrylat und Cyclohexyl(meth)acrylat ; (Cyclo)alkylester von Maleinsäure, Furmarsäure und Itaconsäure wie z.B. Dimethylmaleat, Diethylmaleat, Diethylfumarat, Dipropylmaleat, Dibutylmaleat und Dibutylfumarat; (Meth)acrylate mit Ethergruppen wie z.B. 2-Methoxyethyl(meth)acrylat, 2-Ethoxyethyl(meth)acrylat und 3-Methoxypropyl(meth)acrylat; Hydroxyalkyl(meth)acrylate wie z.B. 2-Hydroxyethyl(meth)acrylat, 2-Hydroxypropyl(meth)acrylat, 4-Hydroxybutyl(meth) acrylat, 6-Hydroxyhexyl(meth)acrylat, Hydroxycyclohexyl(meth)acrylat, Hydroxypolyethylenglykol(meth)acrylate und Hydroxypolypropylenglykol(meth)acrylate; ethylenisch ungesättigte aromatische Verbindungen wie Styrol, Vinyltoluol und α-Methylstyrol sowie andere ethylenisch ungesättigte Monomere wie z.B. (Meth)acrylamid, (Meth)acrylnitril, N-Methylol(meth)acrylamid, Vinylacetat, Vinylpropionat und Vinylpyrrolidon.

Die Komponente (A) setzt sich aus 2,5 - 13, vorzugsweise 5 bis 10 Gew.-% der Komponente (a1) und 87 - 97,5, vorzugsweise 90 bis 95 Gew.-% der Komponente (a2) zusammen, wobei die Summe der Gew.-%-Angaben der Komponenten (a1) und (a2) stets 100 Gew.-% ergibt. Die Komponenten (a1) und (a2) werden vorzugsweise so ausgewählt, daß eine alleinige Polymerisation der Komponente (A) zu einem Polymer mit einer Säurezahl von 22 bis 100, vorzugsweise 40 bis 70, einer Hydroxylzahl von 30 bis 200, vorzugsweise 40 bis 140 und einer Glasübergangstemperatur T_{G} von -40 bis +70 °C, vorzugsweise -20 bis +50 °C führt.

Die Komponente (B1) ist ein Umsetzungsprodukt aus der Komponente (b1) und der Komponente (b2), das pro Molekül im statistischen Mittel höchstens noch 0,25 Epoxidgruppen und mindestens 0,4, vorzugsweise 0,6 bis 1,8, besonders bevorzugt 0,8 bis 1,3, von der Komponente (b21) stammende ethylenisch ungesättigte Gruppen enthält. Die Komponente (B1) ist vorzugsweise epoxidgruppenfrei.

Als Komponente (b1) kann jede Verbindung eingesetzt werden, die pro Molekül im statistischen Mittel mindestens 1,5 Epoxidgruppen enthält oder eine Mischung aus solchen Verbindungen. Als Verbindung, die pro Molekül im statistischen Mittel mindestens 1,5 Epoxidgruppen enthält, kann beispielsweise ein Diglycidylether von Bisphenol A, ein Epoxidgruppen enthaltendes Oligomer aus Epichlorhydrin und Bisphenol A mit einem zahlenmittleren Molekulargewicht von 300 bis 2000, ein epoxidgruppenhaltiges Oligomer aus Epichlorhydrin und hydriertem Bisphenol A mit einem zahlenmittleren Molekulargewicht von 300 bis 2000, 1,4-Butandioldiglycidylether, Polypropylenglykoldiglycidylether, Bis(2,3-Epoxi-6-Methylcyclohexylmethyl)adipat und 3,4-Epoxicyclohexylmethyl-3,4-epoxicyclohexylcarboxylat.

Als Komponente (b1) wird vorzugsweise ein Umsetzungsprodukt aus
(b11) n Mol einer Verbindung, die pro Molekül im statistischen Mittel 1,5 bis 2,5 Epoxidgruppen enthält oder einer Mischung aus solchen Verbindungen und
(b12) n-1 Mol einer Dicarbonsäure mit 2 bis 40 Kohlenstoffatomen oder einer Mischung aus solchen Dicarbonsäuren
eingesetzt, wobei n = 2-10 ist.

Als Komponente (b11) kann jede Verbindung, die pro Molekül im statistischen Mittel 1,5 bis 2,5 Epoxidgruppen enthält oder eine Mischung aus solchen Verbindungen eingesetzt werden. Als Komponente (b11) können die oben aufgezählten epoxidgruppenhaltigen Verbindungen eingesetzt werden.

Als Komponente (b12) wird eine Dicarbonsäure mit 2 bis 40 Kohlenstoffatomen oder eine Mischung aus solchen Dicarbonsäuren eingesetzt. Als Beispiele für Dicarbonsäuren mit 2 bis 40 Kohlenstoffatomen werden genannt: Oxalsäure, Adipinsäure, Isophthalsäure, Phthalsäure, Hexahydrophthalsäure, Sebazinsäure, Dodecandisäure, Azelainsäure und dimerisierte Fettsäuren.

Als Komponente (b1) werden vorzugsweise Verbindungen eingesetzt, die keine aromatischen Strukturelemente enthalten.

Als Komponente (b2) wird eine Mischung aus
(b21) einer ethylenisch ungesättigten Monocarbonsäure mit 3 bis 8, vorzugsweise 3 bis 6, Kohlenstoffatomen oder einer Mischung aus solchen Monocarbonsäuren und
(b22) einer gesättigten Fettsäure oder einer Mischung aus gesättigten Fettsäuren
eingesetzt.

Als Beispiele für ethylenisch ungesättigte Monocarbonsäuren, die als Komponente (b21) einsetzbar sind, werden genannt: Acrylsäure, Methacrylsäure und Ethacrylsäure.

Als Komponente (b21) wird vorzugsweise Acrylsäure oder Methacrylsäure oder eine Mischung aus Acrylsäure und Methacrylsäure eingesetzt.

Als Komponente (b22) wird eine gesättigte Fettsäure, vorzugsweise eine gesättigte Fettsäure mit 14 bis 24, besonders bevorzugt mit 16 bis 20 Kohlenstoffatomen oder eine Mischung aus solchen gesättigten Fettsäuren eingesetzt. Als Beispiele für einsetzbare gesättigte Fettsäuren werden genannt: Myristinsäure, Palmitinsäure, Stearinsäure, Arachinsäure, Behensäure und Lignocerinsäure.

Die Komponente (B1) wird hergestellt, indem die Komponenten (b1) und (b2) in einem solchen Mengenverhältnis miteinander umgesetzt werden, daß das Umsetzungsprodukt im statistischen Mittel höchstens noch 0,25 Epoxidgruppen und mindestens 0,4, vorzugsweise 0,6 bis 1,8, besonders bevorzugt 0,8 bis 1,3, von der Komponente (b21) stammende, ethylenisch ungesättigte Gruppen enthält. Die Umsetzung zwischen den Komponenten (b1) und (b2) erfolgt nach gut bekannten Methoden der organischen Chemie und wird vorzugsweise in einem organischen Lösemittel bei Temperaturen von 60 bis 200 °C durchgeführt. Das eingsetzte organische Lösemittel sollte wassermischbar sein. Es kann auch ein Katalysator eingesetzt werden, der die Reaktion zwischen Epoxidgruppen und Carboxylgruppen katalysiert. Derartige Katalysatoren sind gut bekannt. Als Beispiele werden p-Toluolsulfonsäure, basische Amine, Ammonium- und Phosphoniumsalze genannt.

Die Komponente (B2) ist erhältlich, indem die Komponente (b1) mit (b3), einem Halbester aus einer ethylenisch ungesättigten Dicarbonsäure und einem gesättigten Fettalkohol oder einer Mischung aus solchen Halbestern in einem solchen Mengenverhältnis umgesetzt wird, daß das Umsetzungsprodukt höchstens noch 0,25 Epoxidgruppen und mindestens 0,4, vorzugsweise 0,6 bis 1,8, besonders bevorzugt 0,8 bis 1,3, von der Komponente (b3) stammende, ethylenisch ungesättigte Gruppen enthält. Die Komponente (B2) ist vorzugsweise epoxidgruppenfrei.

Die Komponente (b3) ist durch einfache Veresterung einer ethylenisch ungesättigten Dicarbonsäure mit einem gesättigten Fettalkohol herstellbar. Als ethylenisch ungesättigte Dicarbonsäure können beispielsweise Maleinsäure, Furmarsäure oder Itaconsäure oder die Säureanhydride von Maleinsäure, Furmarsäure und Itaconsäure eingesetzt werden. Als gesättigter Fettalkohol wird vorzugsweise ein gesättigter Fettalkohol mit 12 bis 26, besonders bevorzugt 12 bis 18 Kohlenstoffatomen eingesetzt. Als Beispiele für einsetzbare Fettalkohole werden genannt: Myristinalkohol, Palmitinalkohol, Stearinalkohol, Arachinalkohol, Behenalkohol und Lignocerinalkohol.

Die Komponente (B3) ist herstellbar, indem die Komponente (b1) mit
(b4) einer Mischung aus den Komponenten (b21), (b22) und (b3) oder einer Mischung aus den Komponenten (b21) und (b3) oder einer Mischung aus den Komponenten (b22) und (b3)
umgesetzt wird, wobei die Zusammensetzung der Komponente (b4) und das Gewichtsverhältnis, in dem die Komponenten (b1) und (b4) miteinander umgesetzt werden, so ausgewählt werden, daß das Umsetzungsprodukt aus der Komponente (b1) und (b4) höchstens noch 0,25 Epoxidgruppen und mindestens 0,4, vorzugsweise 0,6 bis 1,8, besonders bevorzugt 0,8 bis 1,3 von der Komponente (b21) und/oder der Komponente (b3) stammende, ethylenisch ungesättigte Gruppen enthält. Die Komponente (B3) ist vorzugsweise epoxidgruppenfrei.

Die erfindungsgemäß eingesetzten wäßrigen Polymerdispersionen sind herstellbar, indem 1,0 Gew.-Teile der Komponente (A) in Gegenwart von 0,5 bis 9,0, vorzugsweise 1,0 bis 5,0 Gewichtsteilen der Komponenten (B1) oder in Gegenwart von 0,5 bis 9,0, vorzugsweise 1,0 bis 5,0 Gewichtsteilen der Komponente (B2) oder in Gegenwart von 0,5 bis 9,0, vorzugsweise 1,0 bis 5,0 Gew.-Teilen der Komponente (B3) radikalisch polymerisiert werden und das erhaltene Reaktionsprodukt während oder nach der Neutralisation von mindestens 20 Prozent der im Reaktionsprodukt enthaltenen Säuregruppen in eine wäßrige Polymerdispersion überführt wird.

Die Polymerisation ist in einem organischen Lösemittel oder Lösemittelgemisch in Gegenwart mindestens eines freie Radikale bildenden Initiators durchführbar. Als organische lösemittel und freie Radikale bildende Polymerisationsinitiatoren können die für die Lösungspolymerisation gut bekannten organischen Lösemittel und freie Radikale bildende Polymerisationsinitiatoren eingesetzt werden.

Als brauchbare Lösemittel werden Butylglykol, 2-Methoxypropanol, n-Butanol, Methoxybutanol, n-Propanol, Ethylenglycolmonomethylether, Ethylenglycolmonoethylether, Ethylenglycolmonobutylether, Diethylenglycolmonomethylether, Diethylenglycolmonoethylether, Diethylenglycoldiethylether, Diethylenglycolmonobutylether und 3-Methyl-3-methoxybutanol genannt.

Als Beispiele für brauchbare Polymerisationsinitiatoren werden freie Radikale bildenden Initiatoren, wie z.B. Benzoylperoxid, Azobisisobutyronitril und t-Butylperbenzoat genannt.

Die Polymerisation wird vorzugsweise bei einer Temperatur von 80 bis 160 °C, besonders bevorzugt bei 120 bis 160 °C durchgeführt.

Nach Beendigung der Polymerisation wird das erhaltene Polymerisationsprodukt während oder nach der Neutralisation von mindstens 20 Prozent der im Polymerisationsprodukt enthaltenen Säuregruppen in eine wäßrige Polymerdispersion überführt. Zur Neutralisation der Säuregruppen können sowohl organische Basen als auch anorganische Basen eingesetzt werden, vorzugsweise werden tertiäre Amine, wie z.B. Dimethylethanolamin, Triethylamin, Tripropylamin und Tributylamin eingesetzt.

Der Feststoffgehalt der erfindungsgemäß bereitgestellten wäßrigen Polymerdispersionen liegt üblicherweise bei 20 bis 60 Gew.-%, vorzugsweise zwischen 35 und 55 Gew.-%.

Die erfindungsgemäßen wäßrigen Polymerdispersionen können zur Herstellung von wäßrigen Lacken verwendet werden. Die die erfindungsgemäßen Polymerdispersionen enthaltenden wäßrigen Lacke können ein Vernetzungsmittel enthalten. Als geeignete Vernetzungsmittel werden N-Methylol- und/oder N-Methylolethergruppen enthaltende Aminoplastharze und blockierte Polyisocyanate genannt. Besonders bevorzugt werden Melaminharze als Vernetzungsmittel eingesetzt, wobei die Melaminharze ganz besonders bevorzugt sind, die pro Molekül 4-6 Methylolgruppen enthalten,wobei mindestens 3 dieser Methylolgruppen mit einem kurzkettigen Alkohol, wie z.B. Methanol oder Butanol verethert sind. Als Beispiele für einsetzbare blockierte Polyisocyanate werden mit Methylethylketoxim blockierte Polyisocyanate genannt.

Die Vernetzungsmittel werden in einer solchen Menge eingesetzt, daß das Äquivalentverhältnis zwischen den im Polymerisationsprodukt und den im Vernetzungsmittel enthaltenen reaktiven Gruppen zwischen 0,7 und 1,5 liegt.

Je nach Anwendungszweck der aus den erfindungsgemäß eingesetzten wäßrigen Polymerdispersionen hergestellten Lacke können die Lacke eine Vielzahl weiterer für den jeweiligen Anwendungszweck erforderliche Zusätze, wie z.B. Pigmente, Farbstoffe, Pigmentdispergierhilfsmittel, Rheologiehilfsmittel, UV-Stabilisatoren, und Lichtschutzmittel enthalten.

Erfindungsgemäße wäßrige Lacke können in Verfahren zur Lackierung von Automobilkarosserien, bei denen eine Elektrotauchlackschicht, eine Füllerschicht und eine einschichtige, pigmentierte Decklackschicht oder eine aus einer pigmentierten Basislackschicht und einer transparenten Decklackschicht bestehende, zweischichtige Decklackierung übereinanderlackiert und in mehreren Einbrennschritten nacheinander eingebrannt werden, zur Herstellung der Füllerschicht, der einschichtigen, pigmentierten Decklackschicht, der pigmentierten Basislackschicht oder der transparenten Decklackschicht eingesetzt werden. Aus den erfindungsgemäß bereitgestellten wäßrigen Polymerdispersionen sind insbesondere transparente wäßrige Lacke herstellbar, die sich ganz besonders gut zur Herstellung der transparenten Decklackschicht in dem oben beschriebenen Verfahren zur Lackierung von Automobilkarosserien eignen. Mit diesen Lacken hergestellte transparente Decklackschichten zeichnen sich gegenüber den gemäß EB-A-469 646 hergestellten Decklackschichten durch eine erhöhte Vergilbungsresistenz aus. Außerdem weisen Lackschichten, die unter Verwendung von wäßrigen Lacken auf Basis der erfindungsgemäß bereitgestellten Polymerdispersionen hergestellt worden sind, gute Oberflächeneigenschaften, insbesondere hohe Säure- und Kratzbeständigkeiten auf.

In den folgenden Beispielen wird die Erfindung näher erläutert. Alle Angaben über Prozente und Teile sind als Gewichtsangaben zu verstehen, wenn nicht ausdrücklich etwas anderes angegeben ist.

### A) Herstellung von erfindungsgemäßen wäßrigen Polymerdispersionen

### Polymerdispersion I

In einem 21 Reaktor mit Rührer, Thermometer, Rückflußkühler und 2 Zulaufgefäßen werden 237,4 g dimerisierte Fettsäure (Pripol® 1009 von Unilever), 150,8 g 3,4-Epoxicyclohexylmethyl-3,4-epoxicyclohexylcarboxylat (Araldite CY-179 von Ciba Geigy), 42,1 g Stearinsäure, 10,4 g Methacrylsäure, 82,6 g 1-Methoxypropanol-2 und 0,7 g Cr (III)-2-Ethylhexanoat intensiv vermischt. Das erste Zulaufgefäß wird mit 70 g Diethylenglykolmonobutylether gefüllt und das zweite Zulaufgefäß wird mit einer Mischung aus 86,8 g Styrol, 31,2 g 2-Hydroxypropylmethacrylat, 59,3 g Butylmethacrylat, 14,4 g Acrylsäure und 8,3 g Dicumylperoxid gefüllt.

Sodann werden Reaktor und Zulaufgefäße mit Stickstoff gespült und der Inhalt des Reaktors wird unter Stickstoff auf 120 °C erhitzt. Diese Temperatur wird für 3 Stunden gehalten. Dann wird der Inhalt des ersten Zulaufgefäßes zugegeben und die Temperatur im Reaktor auf 130 °C erhöht. Danach wird der Inhalt des zweiten Zulaufgefäßes innerhalb von einer Stunde zugegeben und die Temperatur noch für weitere 3 Stunden auf 130 °C gehalten. Sobald der Reaktorinhalt auf 100 °C abgekühlt ist, werden 14,3 g N,N-Dimethylethanolamin und danach innerhalb eines Zeitraumes von 2 Stunden 922 g entionisiertes Wasser zugegeben.

Es wird eine wäßrige Dispersion mit einem Feststoffgehalt (1 h 130 °C) von 37 Gew.-% erhalten.

### Polymerdispersion II

### Herstellung eines Halbesters aus einer ethylenisch ungesättigten Dicarbonsäure und einem gesättigten Fettalkohol

In einem 4 l Stahlkessel, ausgestattet mit Rührer, Thermometer, Ölheizung und Rückflußkühler werden 749 Gew.-Teile eines gesättigten Fettalkoholes (Nafol® 12, 14®, Condea Chemie), 370 Gew.-Teile Maleinsäureanhydrid und 1,1 Gew.-Teile Hydrochinonmonomethylether eingewogen und auf 90 °C aufgeheizt.

Das Reaktionsgemisch wird so lange auf 90 °C gehalten, bis eine Säurezahl ≤ 189 erreicht wird.

### Herstellung der Polymerdispersion II

In einem 2 l Reaktor mit Rührer, Thermometer, Rückflußkühler und 2 Zulaufgefäßen werden 66,1 Gew.-Teile des nach der oben beschriebenen Vorschrift hergestellten Halbesters mit 237,4 g dimerisierter Fettsäure (Pripol® 1009 von Unilever), 150,8 g Epoxicyclohexylmethyl-3,4-epoxicyclohexylcarboxylat (Araldite CY-179 von Ciba Geigy), 11,5 g Stearinsäure, 184,5 g 1-Methoxypropanol-2 und 0,46 g Cr (III)-2-Ethylhexanoat intensiv vermischt. Das erste Zulaufgefäß wird mit 70 g Diethylenglykolmonobutylether gefüllt und das zweite Zulaufgefäß wird mit einer Mischung aus 86,8 g Styrol, 31,2 g 2-Hydroxypropylmethacrylat, 59,3 g Butylmethacrylat, 14,4 g Acrylsäure und 8,3 g Dicumylperoxid gefüllt.

Sodann werden Reaktor und Zulaufgefäße mit Stickstoff gespült und der Inhalt des Reaktors wird unter Stickstoff auf 120 °C erhitzt. Diese Temperatur wird für 3 Stunden gehalten. Dann wird der Inhalt des ersten Zulaufgefäßes zugegeben und die Temperatur im Reaktor auf 130 °C erhöht. Danach wird der Inhalt des zweiten Zulaufgefäßes innerhalb von einer Stunde zugegeben und danach wird die Temperatur noch für weitere 3 Stunden auf 130 °C gehalten. Sobald der Reaktorinhalt auf 100 °C abgekühlt ist, werden 14,3 g N,N-Dimethylethanolamin und danach innerhalb eines Zeitraumes von 2 Stunden 922 g entionisiertes Wasser zugegeben. Es wird eine Dispersion mit einem Feststoffgehalt (1 h, 130 °C) von 33 Gew.-% erhalten.

### B Herstellung erfindungsgemäßer Klarlacke

### Klarlack I

80,6 Gew.-Teile der Polymerdispersion I werden mit 14,2 Gew.-Teilen Melaminharz (Cymel 327 von American Cyanamid, 90%ig), 3,55 Gew.-Teilen Diethylenglykolmonobutylether und 1,65 Gew.-Teilen deionisiertem Wasser intensiv vermischt. Der erfindungsgemäße Klarlack wird auf eine Auslaufzeit von 25 s im DIN 4-Auslaufbecher eingestellt.

### Klarlack II

Klarlack II wird wie Klarlack I hergestellt mit der einzigen Ausnahme, daß anstelle von 80,6 Gew.-Teilen der Polymerdispersion I 90,36 Gew.-Teile der Polymerdispersion II eingesetzt werden.

### C) Herstellung eines Vergleichsklarlackes

76,4 Gew.-Teile einer nach EP-A-469 646, Beispiel 13, hergestellten Dispersion werden mit 14,2 Gew.-Teilen Melaminharz (Cymel 327 von American Cyamamid, 90%ig), 3,55 Gew.-Teilen Diethylenglykolmonobutylether und 5,85 Gew.-Teilen deionisiertem Wasser intensiv vermischt. Der Vergleichsklarlack wird auf eine Auslaufzeit von 25 s im DIN 4-Auslaufbecher eingestellt.

### D) Herstellung zweischichtiger Decklackierungen

Auf mit einem handelsüblichen Elektrotauchlack und einem handelsüblichen Füller lackierte Stahlbleche wird ein handelsüblicher wäßriger aluminiumpigmenthaltiger Basislack bei ca. 65%iger Luftfeuchtigkeit aufgespritzt, 5 Minuten bei Raumtemperatur abgelüftet, 15 Minuten bei 60 °C vorgetrocknet und dann mit den gemäß B) und C) hergestellten Klarlacken überlackiert (Trockenfilmdicke 40-45 µm). Nach einer weiteren Trockenzeit von 5 Minuten bei Raumtemperatur und 10 Minuten bei 80 °C werden die Basislack- und Klarlackschichten 30 Minuten lang bei 150 °C im Umluftofen zusammen eingebrannt. Danach werden die so hergestellten Lackierungen noch einmal 30 Minuten lang bei 140 °C und 30 Minuten lang bei 155 °C überbrannt. Anschließend wird die Vergilbungszahl, die ein Maß für die durch das Überbrennen verursachte Vergilbung ist, nach DIN 6167 bestimmt. Die Ergebnisse können der folgenden Tabelle entnommen werden:

| Lackierung hergestellt mit | | | |
|---|---|---|---|
| Vergilbungszahl nach Überbrennen bei | Klarlack I | Klarlack II | Vergleichsklarlack |
| 140 °C | 1 1,60 | 1,42 | 2,13 |
| 155 °C | 2,20 | 2,00 | 4,60 |

Die mit den erfindungsgemäßen Klarlacken hergestellten Lackierungen sind demnach durch das Überbrennen in geringerem Maße vergilbt worden als die mit dem Vergleichsklarlack hergestellte Lackierung.

## Patentansprüche

1. Wäßriger Automobilkarosserielack enthaltend als Bindemittel eine wäßrige Bindemittel-Polymerdispersion, die herstellbar ist, indem
(A) 1,0 Gewichtsteile einer Mischung aus
(a1) 2,5 bis 13 Gew.-% eines säuregruppenhaltigen, ethylenisch ungesättigten Monomeren oder einer Mischung aus solchen Monomeren und
(a2) 87 bis 97,5 Gew.-% eines säuregruppenfreien, ethylenisch ungesättigten Monomeren oder einer Mischung aus solchen Monomeren,
wobei die Summe der Gewichtsprozentangaben der Komponenten (a1) und (a2) stets 100 Gew.-% ergibt, in Gegenwart von
(B1) 0,5 bis 9,0 Gewichtsteilen eines Umsetzungsproduktes aus
(b1) einer Verbindung, die pro Molekül im statistischen Mittel mindestens 1,5 Epoxidgruppen enthält oder einer Mischung aus solchen Verbindungen und
(b2) einer Mischung aus
(b21) einer ethylenisch ungesättigten Monocarbonsäure mit 3 - 8 C-Atomen oder einer Mischung aus solchen Monocarbonsäuren und
(b22) einer gesättigten Fettsäure oder einer Mischung aus gesättigten Fettsäuren
oder in Gegenwart von
(B2) 0,5 bis 9,0 Gewichtsteilen eines Umsetzungsproduktes aus der Komponente (b1) und
(b3)einem Halbester aus einer ethylenisch ungesättigten Dicarbonsäure und einem gesättigten Fettalkohol oder einer Mischung aus solchen Halbestern
oder in Gegenwart von
(B3) 0,5 bis 9,0 Gewichtsteilen eines Umsetzungssproduktes aus der Komponenten (b1) und
(b4) einer Mischung aus den Komponenten (b21), (b22) und (b3) oder einer Mischung aus den Komponenten (b21) und (b3) oder einer Mischung aus den Komponenten (b22) und (b3)
radikalisch polymerisiert werden und das erhaltene Polymerisationsprodukt während oder nach der Neutralisation von mindestens 20 Prozent der im Polymerisationsprodukt enthaltenen Säuregruppen in eine wäßrige Polymerdispersion überführt wird, wobei die Komponenten (b1), (b2), (b3) und (b4) in solchen Mengenverhältnissen miteinander umgesetzt werden, daß die Komponenten (B1), (B2) und (B3) pro Molekül im statistischen Mittel höchstens noch 0,25 Epoxidgruppen und mindestens 0,4 von der Komponente (b21) und/oder der Komponente (b3) stammende ethylenisch ungesättigte Gruppen enthalten.

2. Wäßriger Automobilkarosserielack nach Anspruch 1, dadurch gekennzeichnet, daß die Komponenten (a1) und (a2) so ausgewählt werden, daß eine alleinige Polymerisation der Komponente (A) zu einem Polymer mit einer Säurezahl von 23 bis 100, vorzugsweise 40 bis 70, einer Hydroxylzahl von 30 bis 200, vorzugsweise 40 bis 140 und einer Glasübergangstemperatur TG von -40 bis +70°C, vorzugsweise -20 bis + 50°C führt.

3. Wäßriger Automobilkarosserielack nach Anspruch 1 oder 2, dadurch gekennzeichnet, daß die Komponente (b1) ein Umsetzungsprodukt aus
(b11) n Mol einer Verbindung, die pro Molekül im statistischen Mittel 1,5 bis 2,5 Epoxidgruppen enthält oder einer Mischung aus solchen Verbindungen und
(b12) n-1 Mol einer Dicarbonsäure mit 2 bis 40 Kohlenstoffatomen oder einer Mischung aus solchen Dicarbonsäuren
ist, wobei n = 2-10 ist.

4. Wäßriger Automobilkarosserielack nach einem der Ansprüche 1 bis 3, dadurch gekennzeichnet, daß als Komponente (b21) Acrylsäure, Methacrylsäure oder eine Mischung aus diesen ethylenisch ungesättigten Monocarbonsäuren eingesetzt wird.

5. Wäßriger Automobilkarosserielack nach einem der Ansprüche 1 bis 4, dadurch gekennzeichnet, daß als Komponente (b22) eine gesättigte Fettsäure mit 14 bis 24, vorzugsweise 16 bis 20 Kohlenstof fatomen oder eine Mischung aus solchen gesättigten Fettsäuren eingesetzt wird.

6. Wäßriger Automobilkarosserielack nach einem der Ansprüche 1 bis 5, dadurch gekennzeichnet, daß als Komponente (b3) ein Halbester aus Maleinsäure, Fumarsäure oder Itaconsäure und einem gesättigten Fettalkohol mit 12 bis 26, vorzugsweise 12 bis 18 Kohlenstoffatomen eingesetzt wird.

7. Wäßriger Automobilkarosserielack nach einem der Ansprüche 1 bis 6, dadurch gekennzeichnet, daß die Komponenten (B1), (B2) und (B3) pro Molekül im statistischen Mittel 0,6 bis 1,8, vorzugsweise 0,8 bis 1,3, von der Komponente (b21) und/oder der Komponente (b3) stammende ethylenisch ungesättigte Gruppen enthalten.

8. Verfahren zur Lackierung von Automobilkarosserien, bei dem eine Elektrotauchlackschicht, eine Füllerschicht und eine einschichtige, pigmentierte Decklackschicht oder eine aus einer pigmentierten Basislackschicht und einer transparenten Decklackschicht bestehende zweischichtige Decklackierung übereinander lackiert und in mehreren Einbrennschritten nacheinander eingebrannt werden, dadurch gekennzeichnet, daß zur Herstellung der Füllerschicht, der einschichtigen, pigmentierten Decklackschicht, der pigmentierten Basislackschicht oder der transparenten Decklackschicht ein wäßriger Automobilkarosserielack nach einem der Ansprüche 1 bis 7 eingesetzt wird.

9. Verfahren nach Anspruch 8, dadurch gekennzeichnet, daß zur Herstellung der transparenten Decklackschicht ein wäßriger Automobilkarosserielack nach einem der Ansprüche 1 bis 7 eingesetzt wird.

## Claims

1. Aqueous motor vehicle body coating material comprising as binder an aqueous binder/polymer dispersion which can be prepared in that
(A) 1.0 part by weight of a mixture of
(a1) from 2.5 to 13% by weight of an ethylenically unsaturated monomer which contains acid groups, or of a mixture of such monomers, and
(a2) from 87 to 97.5% by weight of an ethylenically unsaturated monomer which is free from acid groups, or of a mixture of such monomers,
the sum of the percentages by weight of components (a1) and (a2) always being 100% by weight, are subjected to free-radical polymerization in the presence of
(B1) from 0.5 to 9.0 parts by weight of a reaction product of
(b1) a compound which contains on average per molecule at least 1.5 epoxide groups, or a mixture of such compounds, and
(b2) a mixture of
(b21) an ethylenically unsaturated monocarboxylic acid having 3-8 carbon atoms, or a mixture of such monocarboxylic acids, and
(b22) a saturated fatty acid, or a mixture of saturated fatty acids,
or in the presence of
(B2) from 0.5 to 9.0 parts by weight of a reaction product of component (b1) and
(b3) a monoester of an ethylenically unsaturated dicarboxylic acid and a saturated fatty alcohol, or a mixture of such monoesters,
or in the presence of
(B3) from 0.5 to 9.0 parts by weight of a reaction product of component (b1) and
(b4) a mixture of components (b21), (b22) and (b3) or a mixture of components (b21) and (b3) or a mixture of components (b22) and (b3).
and the resulting polymerization product is converted, during or after the neutralization of at least 20 per cent of the acid groups contained in the polymerization product, into an aqueous polymer dispersion, components (b1), (b2), (b3) and (b4) being reacted with one another in proportions such that components (B1), (B2) and (B3) contain on average per molecule not more than 0.25 epoxide groups and at least 0.4 ethylenically unsaturated groups which derive from component (b21) and/or component (b3).

2. Aqueous motor vehicle body coating material according to Claim 1, characterized in that components (a1) and (a2) are selected such that the polymerization of component (A) alone leads to a polymer having an acid number of from 23 to 100, preferably from 40 to 70, a hydroxyl number of from 30 to 200, preferably from 40 to 140, and a glass transition temperature TG [sic] of from -40 to +70°C, preferably from -20 to +50°C.

3. Aqueous motor vehicle body coating material according to Claim 1 or 2, characterized in that component (b1) is a reaction product of
(b11) n mol of a compound which contains on average per molecule from 1.5 to 2.5 epoxide groups, or of a mixture of such compounds, and
(b12) n-1 mol of a dicarboxylic acid having from 2 to 40 carbon atoms, or of a mixture of such dicarboxylic acids,
where n is 2-10.

4. Aqueous motor vehicle body coating material according to one of Claims 1 to 3, characterized in that acrylic acid, methacrylic acid or a mixture of these ethylenically unsaturated monocarboxylic acids is employed as component (b21).

5. Aqueous motor vehicle body coating material according to one of Claims 1 to 4, characterized in that a saturated fatty acid having from 14 to 24, preferably from 16 to 20, carbon atoms, or a mixture of such saturated fatty acids, is employed as component (b22).

6. Aqueous motor vehicle body coating material according to one of Claims 1 to 5, characterized in that a monoester of maleic acid, fumaric acid or itaconic acid and a saturated fatty alcohol having from 12 to 26, preferably from 12 to 18, carbon atoms is employed as component (b3).

7. Aqueous motor vehicle body coating material according to one of Claims 1 to 6, characterized in that components (B1), (B2) and (B3) contain on average per molecule from 0.6 to 1.8, preferably from 0.8 to 1.3, ethylenically unsaturated groups deriving from component (b21) and/or component (b3).

8. A process for the finishing of motor-vehicle bodies, in which an electrodeposition coat, a filler coat and a one-layer pigmented topcoat or a two-layer topcoat consisting of a pigmented basecoat and a transparent topcoat are coated over one another and are baked in succession in two or more baking steps, characterized in that an aqueous motor vehicle body coating material according to one of Claims 1 to 7 is employed to produce the filler coat, the one-layer pigmented topcoat, the pigmented basecoat or the transparent topcoat.

9. Process according to Claim 8, characterized in that an aqueous motor vehicle body coating material according to one of Claims 1 to 7 is employed to produce the transparent topcoat.

## Revendications

1. Peinture aqueuse pour carrosseries d'automobiles contenant, en tant que liant, une dispersion polymère aqueuse de liant pouvant être préparée en polymérisant, par voie radicalaire,
(A) 1,0 partie en poids d'un mélange de
(a1) 2,5 à 13 % en poids d'un monomère éthyléniquement insaturé renfermant des groupes acides ou d'un mélange de tels monomères, et
(a2) 87 à 97,5% en poids d'un monomère éthyléniquement insaturé renfermant des groupes acides ou d'un mélange de tels monomères,
la somme des pourcentages en poids des composants (a1) et (a2) étant toujours de 100% en poids, en présence de
(B1) 0,5 à 9,0 parties en poids d'un produit de réaction de
(b1) un composé renfermant, en moyenne statistique, au moins 1,5 groupe époxy par molécule, ou un mélange de tels composés, et
(b2) un mélange de
(b21) un acide monocarboxylique éthyléniquement insaturé ayant de 3 à 8 atomes de carbone, ou un mélange de tels acides monocarboxyliques, et
(b22) un acide gras saturé ou un mélange d'acides gras saturés,
ou en présence de
(B2) 0,5 à 9,0 parties en poids d'un produit de réaction du composant (b1) et de
(b3) un monoester d'un acide dicarboxylique éthyléniquement insaturé et d'un alcool gras saturé, ou un mélange de tels monoesters,
ou en présence de
(B3) 0,5 à 9,0 parties en poids d'un produit de réaction du composant (b1) et de
(b4) un mélange des composants (b21), (b22) et (b3) ou un mélange des composants (b21) et (b3) ou un mélange des composants (b22) et (b3),
et en transformant le produit de polymérisation obtenu, durant ou après la neutralisation d'au moins 20 pour cent des groupes acides présents dans le produit de polymérisation, en une dispersion polymère aqueuse, les composants (b1), (b2), (b3) et (b4) étant mis à réagir les uns avec les autres en proportions telles que les composants (B1), (B2) et (B3) renferment, en moyenne statistique par molécule, au plus encore 0,25 groupe époxy et au moins 0,4 groupe éthyléniquement insaturé provenant du composant (b21) et/ou du composant (b3).

2. Peinture aqueuse pour carrosseries d'automobiles selon la revendication 1, caractérisée en ce que les composants (a1) et (a2) sont choisis de telle sorte qu'une polymérisation du composant (A) seul conduise à un polymère ayant un indice d'acide de 23 à 100, de préférence de 40 à 70, un indice d'hydroxy de 30 à 200, de préférence de 40 à 140, et une température de transition vitreuse Tᵥ de -40 à +70°C, de préférence de -20 à +50°C.

3. Peinture aqueuse pour carrosseries d'automobiles selon la revendication 1 ou 2, caractérisée en ce que le composant (b1) est un produit de réaction de
(b11) n mol d'un composé renfermant, en moyenne statistique, de 1,5 à 2,5 groupes époxy par molécule, ou un mélange de tels composés, et
(b12) n-1 mol d'un acide dicarboxylique ayant de 2 à 40 atomes de carbone, ou un mélange de tels acides dicarboxyliques,
où n = 2-10.

4. Peinture aqueuse pour carrosseries d'automobiles selon l'une quelconque des revendications 1 à 3, caractérisée en ce que l'on utilise, en tant que composant (b21), l'acide acrylique, l'acide méthacrylique ou un mélange de ces acides monocarboxyliques éthyléniquement insaturés.

5. Peinture aqueuse pour carrosseries d'automobiles selon l'une quelconque des revendications 1 à 4, caractérisée en ce que l'on utilise, en tant que composant (b22), un acide gras saturé ayant de 14 à 24, de préférence de 16 à 20 atomes de carbone, ou un mélange de tels acides gras saturés.

6. Peinture aqueuse pour carrosseries d'automobiles selon l'une quelconque des revendications 1 à 5, caractérisée en ce que l'on utilise, en tant que composant (b3), un monoester de l'acide maléique, de l'acide fumarique ou de l'acide itaconique et d'un alcool gras saturé ayant de 12 à 26, de préférence de 12 à 18 atomes de carbone.

7. Peinture aqueuse pour carrosseries d'automobiles selon l'une quelconque des revendications 1 à 6, caractérisée en ce que les composants (B1), (B2) et (B3) renferment, en moyenne statistique par molécule, de 0,6 à 1,8, de préférence de 0,8 à 1,3 groupe éthyléniquement insaturé provenant du composant (b21) et/ou du composant (b3).

8. Procédé de revêtement de carrosseries d'automobiles, dans lequel une couche de peinture par électrodéposition, une couche de charge et une couche de finition pigmentée monocouche ou un revêtement de finition bicouche constitué d'une couche de fond pigmentée et d'une couche de finition transparente sont appliqués les uns sur les autres et cuits successivement en plusieurs étapes de cuisson, caractérisé en ce que l'on utilise une peinture aqueuse pour carrosseries d'automobiles selon l'une quelconque des revendications 1 à 7 en vue de produire la couche de charge, la couche de finition pigmentée monocouche, la couche de fond pigmentée ou la couche de finition transparente.

9. Procédé selon la revendication 8, caractérisé en ce que l'on utilise une peinture aqueuse pour carrosseries d'automobiles selon l'une quelconque des revendications 1 à 7 en vue de produire la couche de finition transparente.
